(19) Europäisches Patentamt
European Patent Office
Office européen des brevets

(11) **EP 4 148 025 A1**

(12) **EUROPEAN PATENT APPLICATION**

(43) Date of publication:
**15.03.2023 Bulletin 2023/11**

(21) Application number: **21195679.2**

(22) Date of filing: **09.09.2021**

(51) International Patent Classification (IPC):
**C03C 3/089** (2006.01)     **C03C 3/091** (2006.01)
**C03C 3/097** (2006.01)     **C03C 21/00** (2006.01)

(52) Cooperative Patent Classification (CPC):
**C03C 3/089; C03C 3/091; C03C 3/097;
C03C 21/002**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SCHOTT AG
55122 Mainz (DE)**

(72) Inventors:
• **LI, Yigang
Shanghai (CN)**

• **SEUTHE, Thomas
07747 Jena (DE)**
• **CHEN, Bin
Shanghai (CN)**
• **VON FINTEL, Sandra
07743 Jena (DE)**

(74) Representative: **Blumbach · Zinngrebe
Patentanwälte PartG mbB
Alexandrastraße 5
65187 Wiesbaden (DE)**

(54) **CHEMICALLY STRENGTHENED GLASS SHEET AND METHOD FOR ITS PRODUCTION**

(57)     The invention generally relates to glass sheets, in particular to chemically strengthened glass sheets, as well as to a method of production for these glass sheets. More particularly, the invention relates to glass sheets comprising a borosilicate glass.

Fig. 2

EP 4 148 025 A1

**Description**

Field of invention

The invention generally relates to glass sheets, in particular to chemically strengthened glass sheets, as well as to a method of production for these glass sheets. More particularly, the invention relates to glass sheets comprising a borosilicate glass.

Background of invention

Glass sheets are widely used as viewing panels or protective sheets. For example, it is known to use glass sheets as windshields in automotive applications, or as covers in smartphones.

When using glass sheets as protective covers for sensor applications, the glass sheets need to meet several specifications. In particular, in case of optical sensors, the glass sheets used for protective housings and/or covers should show a high resistance against mechanical failure such as breakage, especially when the glass surface has been scratched or abraded. Therefore, the glass sheet surfaces should have a high resistance against scratch formation and/or abrasion, Further, a high weathering or corrosion resistance is required.

Glass sheets comprising or consisting of soda lime glass show neither satisfactory performance in corrosion resistance nor in mechanical strength.

While it is known to use borosilicate glasses instead of soda lime glasses, as borosilicate glasses has superior weathering and/or corrosion resistance as well as a superior resistance to surface defects such as scratches compared to soda lime glasses, their mechanical strength with regard to breakage is still not sufficient.

In order to provide high mechanical strength glass articles, such as glass sheets, may be strengthened, for example by tempering or by ion exchange (so-called chemical toughening or chemical strengthening). For example, it is known to chemically strengthen alumosilicate glasses (AS glasses) or lithium containing alumosilicate glasses (so-called LAS glasses). In particular chemically strengthened LAS glasses are known for their high mechanical strength that leads to a high resistance against breakage. However, because of the composition and the resulting glass structure, chemically strengthened LAS glass articles are rather susceptible to scratching and/or abrasion, especially compared to glass articles made of glasses comprising boron oxide.

For example, international patent application WO 2019/130285 A1 relates to a laminate, for example for use as a windshield, comprising an outer borosilicate glass layer that may be strengthened. However, WO 2019/130285 A1 does neither disclose any compositional details of the borosilicate glass nor relate to specifics of the strengthening process.

International patent application WO 2019/161261 A1 relates to LiDAR-covers with laminate glasses. The laminated glass articles comprise a core layer and two clad layers, wherein the clad layers have a lower CTE than the core layer. The glasses may comprise a borosilicate glass. The laminated glass article according to WO 2019/161261 A1 further is configures to absorb visible light.

US 10252935 B2 discloses a chemically tempered glass plate. The glass plate may be strengthened so that a high compressive stress of more than 200 MPa and, hence, a high breaking strength, may be achieved.

US 2020/0132521 A1 relates to a sensor module and a protective glass therefore. The protective glass may be chemically strengthened, and very high compressive stresses of about 400 MPa or more may be achieved. Further, the content of $B_2O_3$ should be minimized in order to avoid damage to production facilities and/or the formation of striae.

International patent application WO 2020/247245 A1 relates to hardened optical windows for LiDAR applications. Compressive stresses of glass windows may be very high. For example, maximum compressive stress values of up to about 1000 MPa may be achieved.

However, none of the glass articles of the state of the art combines high mechanical strength against breakage and high surface resistance against abrasion and/or scratching.

Therefore, there is a need for glass articles combining a sufficient mechanical strength for cover applications while providing, at the same time, a good abrasion and/or scratch resistant surface. Further, there is a need for a manufacturing process of such articles.

Object of invention

The object of the present invention is to provide glass articles, in particular glass sheets, that overcome the drawbacks of the glass articles of the state of the art at least partially. A further object is to provide a manufacturing process for such glass articles, in particular glass sheets.

Summary of invention

The problem of the invention is solved by the subject-matter of the independent claims. Special and preferred embodiments are subject of dependent claims, the description and the figures of the present application.

The invention therefore relates to a glass sheet, in particular a chemically strengthened glass sheet, that has a thickness of at least 3.3 mm, preferably at least 3.5 mm, more preferably at least 3.8 mm, and at most 6 mm, preferably at most 5 mm, more preferably at most 4.5 mm and that comprises, in mole-% on an oxide basis, the following components:

| | |
|---|---|
| $SiO_2$ | 65 to 85 |
| $B_2O_3$ | 3 to 13 |
| $\Sigma\,(R_2O + RO)$ | 3 to 19 |

wherein $R_2O$ represents any of $Li_2O$, $Na_2O$, and $K_2O$, and any combination thereof, and wherein RO represents any of MgO, CaO, SrO and BaO, and any combination thereof.

Preferably, the glass sheet shows no breakage in two cycles of gravel test according to VW80000 M-02 (ISO 20567-1), preferably for a glass sheet size of 136 by 63 $mm^2$.

Additionally or alternatively, the glass sheet, for a glass sheet size of 136 by 63 $mm^2$, preferably passes a ball drop test according to PV 3905 with a drop height of at least 30 cm using a 500 g steel ball with a diameter of 50 mm. "Passing a ball drop test", in the sense of the present disclosure means, that no breakage occurs for drop heights of less than 30 cm. Preferably, even higher drop heights than 30 cm do not result in breakage of the glass sheet. Therefore, according to an embodiment, the glass sheet of the disclosure passes a ball drop test according to PV 3905 with a drop height of at least 35 cm, preferably at least 40 cm and more preferably at least 45 cm.

Drop height is preferably determined as average drop height for a minimum of at least 4 samples and up to 10 samples. However, if only few samples are available, drop height may also be determined using a single test sample.

Such as glass sheet offers several advantages.

The glass sheet according to the disclosure comprises network-forming oxide $SiO_2$ in an amount between 65 to 85 percent by mole, as well as $B_2O_3$, an oxide that may both be regarded as network former or as an intermediate oxide in an amount of at least 3 percent by mole and up to 13 percent by mole. The high content of $SiO_2$ and $B_2O_3$ in the glass sheets according to the disclosure of at least 68 percent by mole, in particular the high content of $SiO_2$ of up to 85 percent by mole, leads to a rather rigid glass network that is able to take up and retain mechanical stresses induced, for example, by ion exchange. However, at the same time, the content of $B_2O_3$ ensures that even for high amounts of $SiO_2$, the glass may still be obtained in a conventional glass melting process, as $B_2O_3$ is a component lowering the melting temperature of glass melts. Therefore, the content of $B_2O_3$ is at least 3 percent by mole. Further, $B_2O_3$ improves the scratch and/or abrasion resistance of the glass sheet surface. However, in order to avoid damages to glass productions facilities, such as a glass tank, the $B_2O_3$ content in the glasses according to the disclosure is limited and the glass sheet comprises at most 13 percent by mole of $B_2O_3$. A further advantage of $B_2O_3$ is that boron-containing glasses and glass articles, such as glass sheets, comprising or consisting of such boron containing glasses show a higher chemical resistance and, thus, corrosion resistance.

The glass sheet according to the disclosure further comprises further oxides $R_2O$ and/or RO, wherein a sum of these oxides $R_2O$ and RO is between at least 3 % by mole and at most 19 % by mole.

Here, $R_2O$ represents any of $Li_2O$, $Na_2O$, and $K_2O$, and any combination thereof, and RO represents any of MgO, CaO, SrO, and BaO, and any combination thereof.

Oxides $R_2O$ and RO, that is, alkali oxides and earth alkali oxides, may also be regarded, from a functional point of view, as so-called network modifier oxides, in contrast to network forming oxides such as $SiO_2$.

Network modifier oxides are important components in glass production, as these components lower glass melting temperature and/or melt viscosity, thereby enabling cost-efficient production. Further, in case the glass article in question is to be chemically toughened, an alkali oxide such as $Li_2O$ and/or $Na_2O$ is a necessary component of the glass in order to enable ion exchange, that is, exchange of a smaller alkali ion for a larger alkali ion to be incorporated in the glass network in a surface layer of the glass sheet or glass article, thereby inducing stress — that is, compressive stress — in the glass network. That is, by inducing a compressive stress in a surface layer of the glass sheet, the article as a whole is strengthened. It is noted here that during ion exchange, usually both sides or principle surfaces of a glass sheet are compressively stressed, as both sides or principle surfaces of the glass sheet are immersed in an ion exchange bath. In order to provide for a glass article that may be chemically toughened or strengthened by ion exchange, the glass article, in particular, the glass sheet according to the disclosure comprises at least 3 % by mole of RO and $R_2O$, as specified further above, and may preferably be higher, in order to enable particularly efficient chemical toughening.

However, as alkali and earth alkali oxides modify and weaken the glass network, the content of RO and $R_2O$ components should not be too high. A too high amount of these oxides may lead to decreased resistance to chemical attack and, while such glasses and glass articles comprising or consisting of such glasses may be easily chemically toughened, even so that very high compressive stresses may be achieved, such glass and glass articles may also have a rather low resistance against surface deterioration, for example caused by scratching and/or abrasion. Therefore, the overall amount of oxides RO and $R_2O$ should not be higher than 19 percent by mole.

Surprisingly, inventors found out that by providing a glass sheet with a composition in the above specified ranges, it is possible not only to obtain, during ion exchange, a chemically toughened or strengthened glass sheet having a sufficiently high mechanical resistance against breakage, but also to provide a glass sheet with superior scratch resistant performance.

A suitable wear test in order to illustrate the superior performance of the glass sheet according to the disclosure is a gravel test according to VW80000 M-02 (ISO 20567-1). The test procedure according to VW80000 M-02 (ISO 20567-1) is an established test procedure in order to determine stone-chip resistance of surfaces, such as paint or coating surfaces, for example, and may also be used for determining the surface quality of uncoated surfaces such as glass sheet surfaces. After performing the test according to VW80000 M-02 (ISO 20567-1), the glass sheet shows no break after two cycles.

Additionally or alternatively, the chemically tempered glass sheet, for a glass sheet size of 136 by 63 mm$^2$, preferably passes a ball drop test according to PV 3905 with a drop height of at least 30 cm or even more, for example a drop height of at least 35 or at least 45 mm, using a 500 g steel ball with a diameter of 50 mm. That is, according to an embodiment, the chemically strengthened glass sheet of the disclosure has a high resistance to breakage. Preferably, the chemically strengthened glass sheet of the disclosure at the same time exhibits superior surface resistance, that is, a high resistance of the glass sheet surface against mechanical wear such as scratching and/or abrasion.

According to an embodiment, a sum of components $SiO_2$, $B_2O_3$ and $Al_2O_3$ in the glass sheet, given in mol% on an oxide basis, is at least 80, preferably at least 84, more preferably at least 90, and particularly preferably at most 98, more particularly preferably at most 94 and most particularly preferably at most 91. Further, the glass sheet has a network modifier oxide content, given in mol% on an oxide basis, of at least 3 and preferably at most 19, more preferably at most 15, most preferably at most 11.

Here, $Li_2O$, $Na_2O$, $K_2O$, MgO, CaO, SrO, BaO or any combination thereof are considered network modifier oxides.

According to this embodiment of the glass sheet, $Al_2O_3$ is a further component of the glass sheet. $Al_2O_3$, as glass component, may either be regarded as a network former or an intermediate oxide, that is, an oxide that may promote network forming as well as induce changes or modifications to a glass network, depending on the exact nature of a specific glass material or glass composition and the introduced amount of $Al_2O_3$.

$Al_2O_3$ is a glass component that may promote a high surface hardness, that is, resistance against surface wear. However, at the same time, a high $Al_2O_3$ content in the glass material and, hence, the glass sheet may give rise to high melting temperatures. Further, it is known that the number of non-bridging oxygen atoms is reduced by the addition of $Al_2O_3$ to an alkali silicate glass. In fact, this addition can be advantageous for the build-up of a rigid network, but as pointed out above is to be seen as critical with respect to the meltability of the resulting glass and/or glass article, such as a glass sheet. Furthermore, the chemical stability of the glass or the resulting glass article, such as a glass sheet, may be decreased for a too high $Al_2O_3$ content of the glass and/or the glass sheet. Therefore, according to embodiment, of the glass or of the glass article, the percentage of $Al_2O_3$ in the glass or glass article is limited.

However, inventors found that the $Al_2O_3$ content may, in the glass sheets according to the disclosure, vary in a rather large range. Quite surprisingly, inventors found that is it not the $Al_2O_3$ content taken alone, but rather the overall content of oxides $Al_2O_3$, $B_2O_3$ and $SiO_2$ that may, according to an embodiment, promote the advantageous properties of the chemically strengthened glass sheets of the disclosure. That is, a rather low $SiO_2$ content of only 65 to 75 % by mole, for example, may be compensated for by a rather high $Al_2O_3$ content, whereas a low content of $Al_2O_3$ is possible for high $SiO_2$ contents such as, for example, 78 % by mole or even more, and/or by adjusting the $B_2O_3$ content in the further above specified ranges, as long as the specifications for the overall content of all three components remain in the specified range of at least 80 %, preferably at least 84 %, more preferably at least 88 %, and particularly preferably at most 98 %, more particularly preferably at most 94 % and most particularly preferably at most 91 %, wherein all percentages are given in mol% on an oxide basis.

Further surprisingly, inventors found that it is not only the overall network former and intermediate oxide content, represented by the above indicated overall content of components $SiO_2$, $B_2O_3$ and $Al_2O_3$ that may be varied in a rather large amount as discussed above, but also that the network modifier amount may be varied in a large range, as long as the overall network modifier content of the glass material and, hence, the glass sheet, is kept within the above indicated ranges. Here, as already specified above, $Li_2O$, $Na_2O$, $K_2O$, MgO, CaO, SrO, BaO or any combination thereof are considered network modifiers (or network modifier oxides).

Inventors further found that a special regard should be kept upon the content of critical components $SiO_2$ and $B_2O_3$ in the glass sheet. Very advantageous chemically toughened or strengthened glass sheets may be obtained for a sum of the components $SiO_2$ and $B_2O_3$ in the glass sheet, given in mol% on an oxide basis, between at least 72, preferably at least 75.5, particularly preferably at least 88, more particularly preferably at least 90, and preferably at most 95. These glass sheets show a very high wear resistant glass sheet surface, especially with regard to scratches and/or abrasion, combined with a high resistance against chemical attack.

In general, without being restricted to any of the embodiments of the disclosure, the indicated components of the chemically strengthened glass sheet further comply with a constraint relating to the content of tetrahedrally and trigonally coordinated boron.

Boron as well as aluminum atoms tend to be tetrahedrally coordinated in a glassy network, especially in the presence of alkaline and alkaline earth oxides. These tetrahedrons fit quite well into glassy networks formed mostly of silicon tetrahedrons.

Further, as shown by Sebastian Bruns, Tobias Uesbeck, Dominik Weil, Doris Möncke, Leo van Wüllen, Karsten Durst und Dominique de Ligny, Influence of Al2O3 Addition on Structure and Mechanical Properties of Borosilicate Glasses, Front. Mater., 28 July 2020, aluminum ions tend to be tetrahedrally coordinated so that in case of an oxygen deficiency due to a deficiency in alkaline and/or alkaline earth elements providing oxygen atoms, boron ions will be trigonally coordinated.

The amount of trigonally coordinated boron ions, $c_{B2O3, trigonal}$, is given as follows:

$$c_{B2O3,trigonal} = c_{B2O3} + c_{Al2O3} - c_{R2O}$$

wherein c, in each case, refers to the content of the respective component, given in mol%, and wherein

- $c_{B2O3}$ refers to the total content of $B_2O_3$ in the respective glass composition,
- $c_{B2O3,trigonal}$ refers to the content of trigonally coordinated $B_2O_3$,
- $c_{Al2O3}$ refers to the total content of $Al_2O_3$, and
- $c_{R2O}$ is the sum of components $Li_2O$, $Na_2O$, and $K_2O$.

According to an embodiment,

$$c_{B2O3, trigonal} > 0.$$

This is advantageous, as in this case, the glass of the glass sheet comprises so called boroxol rings, that is, a planar structure (see Christian Hermansen, Quantitative Evaluation of Densification and Crack Resistance in Silicate Glasses, Master Thesis, Aalborg University, Denmark, July 5th 2011). These boroxol rings tend to aggregate, wherein adjacent boroxol rings may glide one upon the other. That is, these boroxol rings may form, within the glass network, domains with a stacked structure. In parallel to these stacks, the glass network may absorb forces acting upon the glass without any breaking of chemical bonds. In consequence, the strength of the glass network, and, thus of any glass article such as a glass sheet, is improved. For example, a glass sheet comprising such a glass material may show an improved resistance with respect to gravel testing.

The presence of any trigonally coordinated boron may be determined via 11BMAS-NMR analysis.

Boroxol rings within a glass network therefore may also be regarded as a kind of intrinsic lubricant which counteracts brittleness and, at the same time, enhances resistance against surface damages and defects.

However, at the same time, a too high amount of trigonally coordinated boron and, therefore, boroxol rings may negatively affect the chemical resistance, especially the resistance against alkali attack, as alkaline ions may propagate quite quickly in parallel to the aforementioned stacks of boroxol rings.

Therefore, according to a further embodiment, $c_{B2O3, trigonal}$ may preferably be at least 3 mol%, more preferably at least 5 mol%, and further preferably at most 10 mol%, preferably at most 9 mol%, and most particularly preferably at most 8 mol%.

According to a further embodiment, the amount of trigonally coordinated boron ions, $c_{B2O3, trigonal}$, may also be given as follows:

$$c_{B2O3,trigonal} = c_{B2O3} + c_{Al2O3} - c_{Na2O} - c_{K2O} - c_{CaO}.$$

According to a further embodiment, therefore, $c_{B2O3,trigonal}$ is at least 2 mol%, preferably at least 3 mol%, but at most 10 mol%, preferably at most 9 mol%.

The following definitions apply in the scope of the present disclosure:

An exchange bath is understood to be a salt melt, wherein this salt melt is used in an ion exchange method for a glass or a glass article. In the scope of the present disclosure, the terms: exchange bath and ion exchange bath are used synonymously.

Usually, salts are used in technical-grade purity for exchange baths. This means that despite the use of only sodium nitrate, for example, as the initial substance for an exchange bath, certain impurities are also comprised in the exchange bath. In this case, the exchange bath is a melt of a salt, for example, of sodium nitrate, or of a mixture of salts, for example, a mixture of a sodium salt and a potassium salt. In this case, the composition of the exchange bath is indicated in such a way that it refers to the nominal composition of the exchange bath without consideration of possibly present impurities. Therefore, insofar as a 100% sodium nitrate melt is stated in the scope of the present disclosure, this means that only sodium nitrate was used as the raw material. The actual content of the exchange bath of sodium nitrate may, however, deviate therefrom and this is also usual, since technical-grade raw materials in particular have a certain percentage of impurities. These are, however, usually less than 5 wt.%, referred to the total weight of the exchange bath, in particular less than 1 wt.%.

In a corresponding manner, for exchange baths that have a mixture of different salts, the nominal contents of these salts are indicated without consideration of impurities of the initial substances due to the technical grade. An exchange bath with 90 wt.% $KNO_3$ and 10 wt.% $NaNO_3$ thus may also have some small impurities that are caused, however, by the raw materials, and usually should be less than 5%, referred to the total weight of the exchange bath, in particular, less than 1 wt.%.

In addition, the composition of the exchange bath also changes in the course of the ion exchange, in particular, since ions, such as lithium and/or sodium ions, migrate from the glass or the glass article into the exchange bath due to the continued ion exchange. Such a change in the composition of the exchange bath due to aging is also present, of course, but is not considered as long as it is not otherwise explicitly stated. Rather, in the scope of the present disclosure, for indicating the composition of an exchange bath, the nominal original composition is put down.

In the scope of the present disclosure, a stress profile is understood as the application of mechanical stress in a glass article, such as a glass plate, for example, versus the thickness of the glass article considered, given in a diagram. In the scope of the present disclosure, insofar as a compressive stress profile is indicated, this is understood here as that portion of a stress profile, in which the stress assumes positive values, i.e., is greater than zero. Tensile stress, in contrast, has a negative sign.

In the scope of the present disclosure, a glass sheet is a plate-shaped or disc-shaped glass article and such a glass article is understood to be a glass article in which the lateral dimension is smaller in one spatial dimension, at least an order of magnitude smaller, than in the other two spatial directions, whereby these spatial directions are specified relative to a Cartesian coordinate system, in which these spatial directions each time run perpendicular to one another, and in this case, the thickness in the normal direction to the largest or main surface is measured from one main surface to the other main surface.

Since the thickness is at least one order of magnitude smaller than the width and length of the glass article, the width and length in this case can lie on the same order of magnitude. It is, however, also possible that the length is still clearly greater than the width of the glass article. Plate-shaped glass articles or glass sheets in the sense of the present disclosure can therefore also comprise a glass ribbon or strip.

In the sense of the present disclosure, a glass is understood to be a material and a glass article, such as a glass sheet is understood to be a product produced from the glass material and/or comprising the glass material, for example by shaping during hot forming. In particular, a glass article, such as a glass sheet, can be composed of glass or predominantly composed of glass; thus the glass material can contain up to at least 90 wt.% glass.

In the scope of the present disclosure, a chemical prestressing is understood as a process in which a glass article is immersed in a so-called exchange bath. Further, in the scope of the present disclosure, the expressions chemical prestressing, chemical toughening, chemical hardening and chemical strengthening are used synonymously, referring to glass articles such as glass sheets prestressed or toughenend or hardened or strengthened by an ion exchange process. During immersion in a so-called exchange bath, there occurs the exchange of ions. In the sense of the present disclosure, potassium exchange is understood in that potassium ions migrate from the exchange bath into the glass article or glass sheet, in particular into the surface of the glass article or glass sheet, thus, for example, are incorporated therein, whereby simultaneously small alkali ions, such as sodium, for example, migrate from the glass article or glass sheet into the exchange bath. Sodium exchange is understood in a corresponding way, in that sodium ions migrate from the exchange bath into the surface of the glass article or glass sheet, while in contrast, small ions, for example lithium ions migrate from the glass article or glass sheet, in particular from the surface of the glass article, into the exchange bath. As already described above, due to this ion exchange, a compressive stress zone is built up in the surface region of the glass article, for example, the glass sheet.

In the scope of the present document, maximum tensile stress is the value of the tensile stress in the center of the glass article, thus at a depth of half the thickness of the glass article.

The tensile stress is usually provided with a negative sign; in contrast, compressive stresses are given a positive sign, since compression and tension have correspondingly opposite directions. In the scope of the present disclosure, insofar as the value of a tensile stress is indicated without a sign being named, it is understood that this case involves the magnitude of the stress. The definition involves here the sign of the stress, as it is usually used by the person skilled in the art, the developer of prestressed protective glasses with respect to the sign of the stress. This directly deviates from the usual designation of compressive stress as negative and tensile stress as positive, as it is usually used in physics, for example. In the scope of the present disclosure, here, of course, as explained, the definition of stresses reverts back to how they are usually used in the glass industry.

The compressive stress depth for potassium exchange, that is, the exchange of sodium in the glass by potassium ions, if it is specified relative to the respective exchanged components or ions, is also referred to as the so-called "exchange depth". In the scope of the present disclosure, the terms: exchange depth, compressive stress depth and the DoL are used as synonyms at least with respect to potassium-sodium ion exchange. For the sodium-lithium exchange, there is a difference between the DoL and the exchange depth. Further, for characterization of sodium exchange, often the compressive stress value at a depth of 30 $\mu$m is indicated (also referred to as CS(30)), as well as the depth of the compressive stress layer (DoCL).

In the scope of the present disclosure, the term: field strength of an ion is used according to Dietzel. In particular, this term is used referred to an oxidic glass matrix, wherein it is understood that this value may change, each time depending on the coordination number of the ion in question.

With respect to the terms: network modifier and network former, these are understood to be according to Zachariasen.

It has been shown, as pointed out above, that with respect to the build-up of a glass network that is as optimally prestressable as possible in an alkali silicate glass, the components $B_2O_3$, $Al_2O_3$ and $SiO_2$ are interrelated. Therefore, in principle, if the glass is accessible to an ion exchange, it must comprise alkali ions. Due to the content of alkali ions, the glass network is weakened, of course, since non-bridging oxygens arise. These can be reduced by adding $Al_2O_3$ and/or $B_2O_3$ as components to the glass. Varying these components in the above indicated ranges for each component, while ensuring that the sum of these components in the glass and/or the resulting glass article, such as a glass sheet, is kept within a certain range that has also been indicated above, is advantageous, since in this way, a stable, rigid network is obtained, which provides an at least sufficient chemical stability. The content of the above three components in the glass and/or in the glass article or glass sheet should not be too high, however, since if this were the case, the glass is no longer meltable, or no longer economically meltable.

For example, according to an embodiment, a very advantageous compositional range for a glass sheet is obtained for a chemically strengthened glass sheet comprising, in mol% on an oxide basis, the following components:

| | |
|---|---|
| $SiO_2$ | 79 to 85, preferably 80 to 85 |
| $Al_2O_3$ | 0.5 to 4 |
| $B_2O_3$ | 8 to 12 |
| $Na_2O$ | 2.5 to 5.2 |
| $K_2O$ | 0.3 to 1.8 |
| MgO | 0 to 3 |
| CaO | 1.3 to 2.9. |

Here, a high amount of $SiO_2$ ranging from 79 to 85 mol%, preferably 80 to 85 mol%, is combined with a rather low content in $Al_2O_3$ from only 0.5 to 4 mol%, whereas the content in $B_2O_3$ ranges from 8 to 12 mol%.

The glass sheet further comprises network modifiers such as $Na_2O$, CaO and $K_2O$. MgO, which is also a network modifier, is an optional component of a glass sheet according to this embodiment.

As can be seen, according to the above embodiment, the glass or glass sheet comprises $Na_2O$ as a necessary component. As an alkali oxide, $Na_2O$ is a network modifier, and, as a component of a chemically prestressable glass, enables an ion exchange of sodium ions for potassium ions. This is advantageous, as in this case, a well-known, well-mastered process may be used for chemical toughening, using an exchange bath based on potassium salt or salts, that is, well available materials at low price.

Too much $Na_2O$ is unfavorable, however. In particular, the content of $Na_2O$ reduces the chemical stability of the glass, particularly also the acid resistance. Therefore, according to embodiments of the glass and/or the glass article, the content of $Na_2O$ is preferably limited.

It is known, in principal, that a certain amount of $Li_2O$ in a glass or glass article, such as a glass sheet, to be prestressed may positively influences the formation of an optimally prestressable glass or glass article. However, as $Li_2O$ requires rather expensive raw materials, the $Li_2O$ content in a glass should as low as possible. It is therefore particularly advantageous that according to the present disclosure, it is possible to obtain optimized glass sheets without the need to incorporate $Li_2O$ into the glass composition.

Therefore, according to an embodiment, the glass sheet comprises $Li_2O$ only in an unavoidable trace amount of not more than 500 ppm per weight, in particular for embodiments of the glass sheet comprising a high amount of $SiO_2$ ranging from at least 79 to 85 mol%, preferably 80 to 85 mol%, a comparatively low content in $Al_2O_3$ ranging from at least 0.5 to 4 mol% and a $B_2O_3$-content ranging from 8 to 12 mol%.

In the scope of the disclosure, a glass containing $Li_2O$ by not more than 500 ppm by weight may also be called an essentially $Li_2O$-free glass. Further, in the scope of the present disclosure, a glass as described above having a $SiO_2$ content ranging between at least 79 to 85 mol%, preferably 80 to 85 mol%, may also be called a "high $SiO_2$ glass" (or glass article or glass sheet, respectively).

According to an embodiment of such a chemically strengthened glass sheet, a DoL between 8.5 $\mu$m and 13.5 $\mu$m and a compressive stress of 400 MPa or less, preferably 250 MPa or less, particularly preferably 170 MPa or less, more particularly preferably 160 MPa or less, and preferably of at least 140 MPa, in particular between 140 MPa and 170 MPa, particularly preferably between 140 MPa and 160 MPa, preferably for glass sheet thicknesses between at least 3.3 mm, preferably at least 3.5 mm, more preferably at least 3.8 mm, and at most 6 mm, preferably at most 5 mm, more preferably at most 4.5 mm, is obtained. Quite surprisingly, even for such rather low stress levels of at most 400 MPa, a particular advantageous chemically strengthened glass sheet may be obtained, that is, a glass sheet combining a sufficient resistance against mechanical breakage - characterized by a high drop height in a ball drop test - combined with a superior surface resistance such as demonstrated in a gravel test according to VW80000 M-02 (ISO 20567-1), preferably for a glass sheet size of 136 by 63 $mm^2$, and the glass sheet had no break after two cycles of the gravel test.

However, according to an alternative embodiment, the chemically strengthened glass sheet comprises the following components, in mol% on an oxide basis:

| | |
|---|---|
| $SiO_2$ | 67 to 71, preferably 69 to 71 |
| $Al_2O_3$ | 10 to 12 |
| $B_2O_3$ | 3 to 5 |
| $Li_2O$ | 7.5 to 9 |
| $Na_2O$ | 1.0 to 2.4, preferably 2.0 to 2.4 |
| $K_2O$ | 0.1 to 0.3 |
| MgO | 0 to 1.2, preferably 1.0 to 1.2 |
| CaO | 2.5 to 5, preferably 2.5 to 3.5. |
| SrO | 0 to 0.4, preferably 0.1 to 0.4, more preferably 0.1 to 0.3 |

In this above embodiment of the chemically strengthened glass sheet, a comparatively low $SiO_2$ content varying between at least 67 and at most 71 mol% on an oxide basis, preferably between 69 to 71 mol%, is combined with a comparatively high content in $Al_2O_3$ of at least 10 mol% and at most 12 mol% on an oxide basis and a rather low content in $B_2O_3$ between at least 3 and at most 5 mol%. Such as glass (or, glass article or glass sheet, respectively) may also be called a "low $SiO_2$ glass" in the scope of the present disclosure.

As has already been pointed out above, glass components may interact with each other, resulting in the formation of a glass network. For the glasses of the present disclosure, as stated above, inventors found that, surprisingly, glass component contents may be varied in a rather wide range, as long as a glass structure results that may store induced stresses (and, thus, be strengthened, for example by ion exchange) while at the same time providing a good resistance of the resulting glass article or glass sheet surface against mechanical wear, such as scratching and/or abrasion.

Therefore, the advantageous mechanical properties of the glass sheet of the disclosure may also be obtained for glasses with a rather low $SiO_2$ and $B_2O_3$ and a comparatively high $Al_2O_3$ content as indicated by the above ranges. As inventors assume that formation of a particularly dense glass structure may also be promoted by the incorporation of lithium ions in the glass network, however, in the case of glass and glass articles, such as glass sheet with low $SiO_2$ and $B_2O_3$ and a comparatively high $Al_2O_3$ content, these glasses and glass articles preferably comprise $Li_2O$. Upon incorporation of $Li_2O$, a dense structure may result without the need of a high $SiO_2$ content. This is due to lithium ions being small ions with greater field strength. In the scope of the present disclosure, the term "field strength of an ion" is used according to Dietzel. In particular, this term is used referred to an oxidic glass matrix, wherein it is understood that this value may change, each time depending on the coordination number of the ion in question. The higher field strength of the lithium ion, compared to other alkali ions such as sodium ions, may be advantageous, since a particularly dense glass network should provide a smaller volume for deformation in the case of mechanical action, such as, for example, with the exchange of smaller ions for larger ones, as this is the case in ion exchange, and thus should oppose a mechanical deformation. This is believed to result, however, in an improvement in the prestressability, since an introduced stress would be better stored in the glass network. Therefore, according to the "low $SiO_2$ glasses" with only 67 to 71 mol% of $SiO_2$, the rigidity of the glass is provided by a combination of network formers and intermediate oxides combined with

network former Li$_2$O that is, for these "low SiO$_2$ glasses", a mandatory component present in amounts from at least 7.5 to at most 9 mol% on an oxide basis (in comparison to preferably essentially Li$_2$O-free "high SiO$_2$-glasses containing SiO$_2$ in a range from 79 to 85 mol%).

According to one embodiment of the glass and/or of the glass article, the glass and/or the glass article therefore comprise(s) at least 7.5 mol% Li$_2$O.

The percentage of Li$_2$O should not be too high, however, and is preferably limited. As is known, when Li$_2$O is a component in glasses, it leads also to demixing and/or crystallization of the glass. According to embodiments of the glass and/or of the glass article, the glass and/or the glass article therefore comprise(s) at most 9 mol% Li$_2$O.

Further, with these "low SiO$_2$ glasses", preferably glass sheets characterized by a DoCL between 250 $\mu$m and 450 $\mu$m and a compressive stress (CS(30)) of at least 250 MPa may be obtained. Even though these parameters characterizing the prestress level of a glass sheet vary from those in "high SiO$_2$ glasses" glass sheets, inventors found that still the advantageous mechanical properties observed in ball drop tests result. Inventors believe this to be due to the overall, holistic approach of glass composition, regarding components by the function in the glass structure, such that Li$_2$O, a known network modifier, may still compensate for a low SiO$_2$ content at least partially, if combined with tailored amounts of intermediate oxide Al$_2$O$_3$ and network former oxide B$_2$O$_3$, for example.

A further aspect of the present disclosure is directed towards a method for producing a chemically strengthened glass sheet, preferably a chemically strengthened glass sheet according to any embodiment of the present disclosure. The method comprises the followings steps:

- providing a glass sheet,

- providing a bath comprising a molten alkali salt or a mixture of molten alkali salts,

- immersing the glass sheet in the bath, so that an ion exchange takes place,

wherein ion exchange is effected for a duration of at least 2 hours to at most 12 hours and at a temperature between at least 390°C and at most 490°C.

According to an embodiment, the temperature is between at least 420°C and at most 460°C, preferably at most 440°C, wherein most preferably the temperature is 420°C.

According to an embodiment, the duration is between at least 2 hours and at most 12 hours, preferably between at least 4 hours and at most 10 hours, more preferably between at least 4 hours and at most 6 hours, and most preferably the duration is 4 hours.

According to a further embodiment, the alkali salt comprises a nitrate or is a nitrate. Nitrates are preferred as these salts melt at low temperature in comparison to other alkali salts such as, for example, chlorides. Further, anion NO$_3^-$ is a volatile ion that may also decompose at higher temperatures, in comparison to halide ions such as Cl$^-$. Therefore, nitrates are preferred alkali salts used in embodiments of the method of the disclosure.

According to a preferred embodiment, the method comprises only a single immersion step. That is, further ion exchange steps, as known for example for so-called LAS-glasses and glass articles that may be prestressed to very high compressive stresses such as 600 MPa or even more, are not necessary. The method proposed according to a preferred embodiment therefore is a cost-efficient method.

According to an embodiment, the glass sheet composition corresponds to a "high SiO$_2$ glass" glass composition and the alkali salt comprises a potassium salt, preferably KNO$_3$. Particularly preferably, the glass sheet comprises, in this case, Li$_2$O only in an unavoidable trace amount of not more than 500 ppm by weight.

A particularly suited glass composition of a "high SiO$_2$ glass" may be, for example, given in mol% on an oxide basis:

| | |
|---|---|
| SiO$_2$ | 79 to 85, preferably 80 to 85 |
| Al$_2$O$_3$ | 0.5 to 4 |
| B$_2$O$_3$ | 8 to 12 |
| Na$_2$O | 2.5 to 5.2 |
| K$_2$O | 0.3 to 1.8 |
| MgO | 0 to 3 |
| CaO | 1.3 to 2.9. |

However, most important, as pointed out above, is the content of oxides SiO$_2$, Al$_2$O$_3$ and B$_2$O$_3$, as has already explained in detail. Therefore, in general, without being restricted to the compositional ranges indicated above, a suitable

"high $SiO_2$ glass composition" within the scope of the disclosure may be regarded as glass composition with $SiO_2$ ranging from 79 to 85 mol%, preferably 80 to 85 mol%, $Al_2O_3$ ranging from 0.5 to 4 mol% and $B_2O_3$ ranging from 8 to 12 mol%, with network modifiers in varying proportions filling up to 100 mol%, and wherein preferably network modifier $Li_2O$ is only present in an unavoidable trance amount of not more than 500 ppm by weight.

Such as glass composition is preferably well adapted to an ion exchange method comprising a potassium salt, such as $KNO_3$.

In such a process, a "high $SiO_2$ glass" glass article may be obtained that is characterized by a DoL between 8.5 and 13.5 $\mu$m and a compressive stress of 400 MPa or less, preferably 250 or less, particularly preferably 170 MPa or less, more particularly preferably 160 MPa or less, and preferably of at least 140 MPa, in particular between 140 MPa and 170 MPa, preferably between 140 MPa and 160 MPa, preferably for glass sheet thicknesses between at least 3.3 mm, preferably at least 3.5 mm, more preferably at least 3.8 mm, and at most 6 mm, preferably at most 5 mm, more preferably at most 4.5 mm.

According to a further embodiment, the glass sheet composition corresponds to a "low $SiO_2$ glass" composition, and the alkali salt comprises a sodium salt, preferably $NaNO_3$. A glass composition particularly well suited for an ion exchange based on a sodium salt, such as $NaNO_3$, may, for example, be given by the following ranges of components, given in mol% on an oxide basis:

| | |
|---|---|
| $SiO_2$ | 67 to 71, preferably 69 to 71 |
| $Al_2O_3$ | 10 to 12 |
| $B_2O_3$ | 3 to 5 |
| $Li_2O$ | 7.5 to 9 |
| $Na_2O$ | 1.0 to 2.4, preferably 2.0 to 2.4 |
| $K_2O$ | 0.1 to 0.3. |
| MgO | 0 to 1.2, preferably 1.0 to 1.2 |
| CaO | 2.5 to 5, preferably 2.5 to 3.5. |
| SrO | 0 to 0.4, preferably 0.1 to 0.4, more preferably 0.1 to 0.3 |

However, generally, without being restricted to the compositional ranges indicated above, in general a glass composition suited for a method according to embodiments with a $SiO_2$ content ranging from 67 to 71 mol% on an oxide basis, a $Al_2O_3$ content ranging from 10 to 12 mol% on an oxide basis and a $B_2O_3$ content ranging from 3 to 5 % mol% on an oxide basis and further comprising $Li_2O$, in particular in a range ranging from at least 7.5 and at most 9 mol% on an oxide basis, is regarded as "low $SiO_2$ glass" composition and may be prestressed by an ion exchange according to embodiments of the disclosure, in particular based on a sodium salt, such as $NaNO_3$.

Preferably, for such "low $SiO_2$ glasses", the corresponding glass sheet is characterized by a DoCL between 8.5 and 13.5 $\mu$m and a compressive stress (CS30) of 700 MPa or less, and preferably of at least 250 MPa, in particular between 260 and 450 MPa, preferably for glass sheet thicknesses between at least 3.3 mm, preferably at least 3.5 mm, more preferably at least 3.8 mm, and at most 6 mm, preferably at most 5 mm, more preferably at most 4.5 mm.

A yet further aspect of the present disclosure is directed towards the use of the chemically strengthened glass sheet according to embodiments and/or produced in a method according to embodiments as a cover glass for a protective housing for an optical sensor, in particular a LiDAR sensor.

Further, the present application relates to a glass sheet produced in a method according to embodiments of the disclosure.

Examples

The following table comprises some examples of glass compositions according to different embodiments of the present disclosure. In the table, all components are given in mol%. Data were obtained by analysis of melted glass bodies and samples, so that composition may add up to more than 100 mol% or to less than 100 mol% due to analytical errors.

| Example no. | unit | 1 | 2 | 3 | 4 | 5 | 6 | 7 |
|---|---|---|---|---|---|---|---|---|
| Composition | | | | | | | | |
| $SiO_2$ | | 83.3 | 81.6 | 80 | 67.3 | 69.7 | 68.9 | 69.5 |
| $B_2O_3$ | | 11.3 | 8.9 | 8.7 | 8.2 | 3.6 | 3.4 | 3.5 |

(continued)

| Example no. | unit | 1 | 2 | 3 | 4 | 5 | 6 | 7 |
|---|---|---|---|---|---|---|---|---|
| Composition | | | | | | | | |
| $Al_2O_3$ | | 1.5 | 2.6 | 1.5 | 6.5 | 11.1 | 11.0 | 11.3 |
| $Li_2O$ | | | | | | 7.9 | 8.7 | 8.2 |
| $Na_2O$ | | 3.5 | 5 | 2.8 | 5.1 | 2.2 | 1.1 | 1.6 |
| $K_2O$ | | 0.4 | 0.4 | 1.6 | 0.5.1 | 0.2 | 0.2 | 0.2 |
| MgO | | | | 2.8 | 7.1 | 1.1 | | |
| CaO | | | 1.4 | 2.7 | 3.4 | 2.9 | 4.6 | 4.2 |
| SrO | | | | | 2 | 0.2 | 0.4 | 0.3 |
| BaO | | | | | | | | |
| ZnO | | | | | | 0.12 | 0.4 | 0.12 |
| $TiO_2$ | | | | | | 0.01 | | |
| $ZrO_2$ | | | | | | 0.1 | 0.4 | 0.42 |
| $P_2O_5$ | | | | | | 0.27 | 0.6 | 0.32 |
| $SnO_2$ | | | | | | 0.1 | 0.2 | 0.05 |
| NaCl | | 0.1 | 0.23 | | 0.27 | 0.25 | | |
| NaF | | | | | | | | |
| $SO_3$ | | | | | | 0 | | |
| $Sb_2O_3$ / $AS_2O_3$ | | | | | | | | |
| $CeO_2$ | | | | | | 0.15 | 0.18 | 0.28 |
| $Fe_2O_3$ | | | | | | 0.00 | | |
| $Nd_2O_3$ | | | | | | | | |
| | | | | | | | | |
| Hydrolyt. Resis. H | class | HGB 1 | HGB 1 | HGB1 | | HGB1 | | |
| Hydrolyt. Resis. H | äqu. $Na_2O$ [$\mu$g/g] | 8 | | 27 | | 32 | | |
| Acid resis. S | class | S1 | S1 | S1 | | S2 | | |
| Acid resis. S | mg/dm2 | 0.6 | | <0.3 | | 1.4 | | |
| Alkali resis. L | class | A2 | A2 | A2 | | A2 | | |
| Alkali resis. L | mg/dm2 | 164 | | 116 | | 92 | | |
| | | | | | | | | |
| Photo-elastic constant C @640nm | nm/cm MPa | 40 | | 33.7 | | 29.8 | | |
| | | | | | | | | |
| Field strength | | 1.50 | 1.46 | 1.43 | 1.31 | 1.31 | 1.30 | 1.30 |
| | | | | | | | | |
| | | | | | | | | |
| $SiO_2+B_2O_3+Al_2O_3$ | mol% | 96.1 | 93.1 | 90.2 | 82 | 84.4 | 83,3 | 84,3 |
| $SiO_2+B_2O_3$ | mol% | 94.6 | 90.5 | 88.7 | 75.5 | 73.3 | 72.5 | 73.2 |

(continued)

| Example no. | unit | 1 | 2 | 3 | 4 | 5 | 6 | 7 |
|---|---|---|---|---|---|---|---|---|
| Composition | | | | | | | | |
| $R_2O$ + RO | mol% | 3.9 | 6.8 | 9.9 | 18.1 | 14.3 | 15.1 | 14.5 |

Chemical resistance (hydrolytic resistance H, acid resistance A, basic resistance L) was determined according to the following standards: Hydrolytic resistance of a glass is determined and a hydrolytic class is specified according to the regulations of ISO 719 and DIN 12111, respectively. Depending on the quantity of extracted glass constituents, correspondingly tested glasses are classified into classes. Class 1 indicates the class in which only a small amount of material was extracted, and the class number increases with increasing leaching of the glass by hydrolytic attack. Acid resistance and the acid class of a glass are determined according to the regulations of DIN 12116. Here, again, classification into a class is made according to the amount of extracted glass constituents, and the best class is again Class 1. Alkali resistance and the alkali class of a glass are determined according to the regulations of ISO 695 and DIN 52322, respectively. Again, the best class, i.e. the one with the highest alkali resistance, is Class 1.

Gravel test according to VW80000 M-02 (ISO 20567-1) was performed with 500 g of the gravel medium. Test pressure was set to 2 bar. The gravel medium used as chilled iron grit as per DIN EN ISO 11124-2 with a grain size ranging from 4 mm to 5 mm. The device under test, that is, the glass sheet, was set at an angle of 54° to the blasting direction of the gravel material. The test equipment used was a multiple stone-impact device as per DIN EN ISO 20567-1.

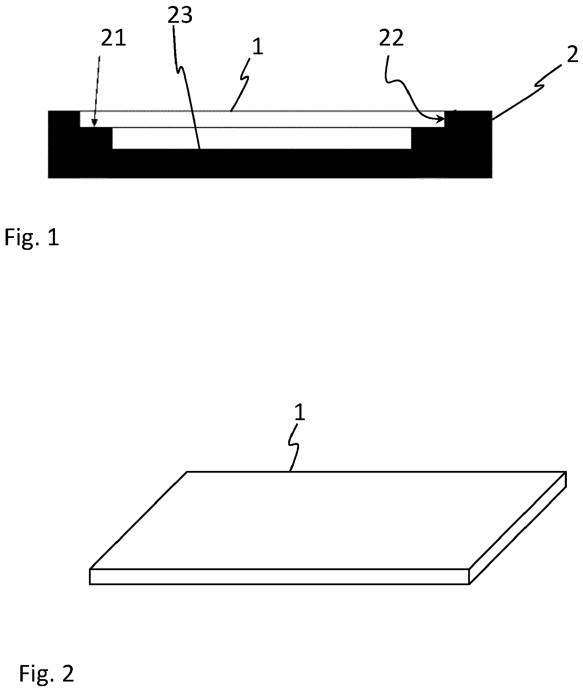

Ball drop testing was performed with a steel ball of 500 g and a diameter of 50 mm. The sample to be tested was placed on a sample holder that is shown schematically and not drawn to scale in fig. 1.

The following table shows examples of glass sheets according to embodiments of the disclosure as well as comparative examples. The material refers to the compositions given in the table further above. Thickness is indicated, as well as the toughening protocol, if the sample in question were toughened. "CV" refers to "characteristic values" after multiple stone-impact testing according to DIN EN ISO 20567-1. Comp. refers to a glass sheet comprising a soda-lime glass.

"Breakage" here refers to breakage occurring after two test cycles of gravel test according to VW80000 M-02 (ISO 20567-1, preferably for a glass sheet size of 136 by 63 mm². If no breakage occurs, the test is passed.

| Material | Thickness | Toughening protocol | CS | DoL | CS (30) | DoCL | Balldrop | CV | Breakage |
|---|---|---|---|---|---|---|---|---|---|
| | | | MPa | $\mu$m | MPa | $\mu$m | | | |
| No. 3 | 4 mm | | | | | | pass 350 mm | 2.0-2.5 | * |
| No. 3 | 4 mm | 420°C / 4h $KNO_3$ | 153 | 9.51 | | | pass 350 mm | 1.5 | No |
| No. 1 | 3.8 mm | | - | - | | | fail 288 mm | 2.0-2.5 | Yes |
| No. 1 | 3.8 mm | 430°C / 8h $KNO_3$ | 161 | 9.61 | | | pass 560 mm | | No |
| No. 1 | 3.8 mm | 460°C / 5h $KNO_3$ | 153 | 9.3 | | | pass 450 mm | | No |
| No. 1 | 3.8 mm | 420°C / 10h $KNO_3$ | 163 | 9.4 | | | pass 705 mm | 1.0-1.5 | No |
| No. 1 | 3.8 mm | 420°C / 10h $KNO_3$ | | | | | | | No |
| No. 1 | 3.8 mm | 440°C / 7h $KNO_3$ | 159 | 9,49 | | | pass 460 mm | | No |
| No. 1 | 3.3 mm | 420°C / 10h $KNO_3$ | | | | | pass 392 mm | | No |

(continued)

| Material | Thickness | Toughening protocol | CS | DoL | CS (30) | DoCL | Balldrop | CV | Breakage |
|---|---|---|---|---|---|---|---|---|---|
| | | | MPa | μm | MPa | μm | | | |
| No. 5 | 1.8 mm | | | | | | failed 283 mm | | |
| No. 5 | 1.8 mm | 440°C / 12h NaNO$_3$ | - | - | 261 | 297 | failed 262 mm | | |
| No. 5 | 1.8 mm | 420°C / 12h 50% KNO$_3$ + 50% NaNO$_3$ | - | - | 265 | 259 | failed 268 mm | | |
| No. 5 | 4.0 mm | 440°C / 12h NaNO$_3$ (1) | - | - | 277 | 364 | pass 750 mm | | |
| No. 5 | 4.0 mm | 420°C / 12h 50% KNO$_3$ + 50% NaNO$_3$ | - | - | 259 | 334 | pass 612 mm | | |
| Comp. | 4.0 mm | 420°C / 4h KNO$_3$ | 640 | 9.6 | | | pass 767 mm | 2,5-3,0 | Yes |
| * under further investigation | | | | | | | | | |

According to DIN EN ISO 20567-1:2017-07, the characteristic values correspond to the following maximum damaged surface areas:

    a) Characteristic value 0,5 damaged area 0,2%
    b) Characteristic value 1,0 damaged area 1,0%
    c) Characteristic value 1,5 damaged area 2,5%
    d) Characteristic value 2,0 damaged area 5,5%
    e) Characteristic value 2,5 damaged area 10,7%
    f) Characteristic value 3,0 damaged area 19,2%
    g) Characteristic value 3,5 damaged area 29,0%
    h) Characteristic value 4,0 damaged area 43,8%
    i) Characteristic value 4,5 damaged area 58,3%
    j) Characteristic value 5,0 damaged area 81,3%

Therefore, in general, without being limited to any particular embodiment, the present disclosure is also directed towards a chemically strengthened glass sheet having a thickness of at least 3.3 mm, preferably at least 3.5 mm, more preferably at least 3.8 mm and at most 6 mm, preferably at most 5 mm, more preferably at most 4.5 mm, comprising, in mol% on an oxide basis, the following components:

    $SiO_2$         65 to 85
    $B_2O_3$         3 to 13
    $\Sigma$ ($R_2O$ + RO)    3 to 19

wherein $R_2O$ represents any of $Li_2O$, $Na_2O$, and $K_2O$, and any combination thereof, and wherein RO represents any of MgO, CaO, and BaO, and any combination thereof,
and wherein a characteristic value, CV, after multiple stone-impact testing according to DIN EN ISO 20567-1, preferably for a glass sheet size of 136 by 63 mm$^2$, is at most 1.5, preferably between 1.0 to 1.5.
In general, gravel testing may be performed for one sample. However, in order to provide for statistic effects, a multitude of test samples may be used, for example about 10 samples.
As can be seen from the above data, a soda-lime glass sheet may be toughened and may also pass the ball drop test; however, the glass sheet will break during gravel test. With respect to composition no. 5, the influence of glass sheet thickness may be illustrated. Low glass thickness lead to failure in ball drop testing, whereas higher glass sheet thicknesses of at least 3.3 mm, preferably at least 3.5 mm, more preferably at least 3.8 mm, or even 4 mm, significantly improve test results in ball drop testing.

Further, test results show that borosilicate glass sheet that were ion-exchanged showed no breakage after two test cycles of gravel test.

Description of figures

The present invention will now be further explained with reference to the following figures. In the figures, like reference numerals refer to the same or corresponding elements.

They show

Fig. 1      schematically and not drawn to scale a test set up of a ball drop test,

Fig. 2      schematically and not drawn to scale a glass sheet according to embodiments of the disclosure, and

Fig. 3 to 5      show photographs of samples according to the disclosure as well as of a comparative example after gravel testing.

Fig. 1 shows schematically and not drawn to scale glass sheet 1 according to an embodiment in a sectional view, placed onto sample holder 2 for the so-called ball drop test.

Sample holder 2 has an overall thickness of 10 mm of a phenolic resin. Further, in order to accurately position glass sheet 1 sample holder 2 comprises a step, characterized by a tread 21 with a width of about 10 mm and riser 22 of 3.4 mm.

Further, sample holder 2 comprises a middle portion step 23 (or depression 23) arranged under a central portion of glass sheet 1. Glass sheet 1 has, in the example depicted in fig. 1, as size of about 136 by 63 $mm^2$.

Fig. 2 shows a perspective view of a schematic and not drawn to scale glass sheet according to embodiments of the disclosure.

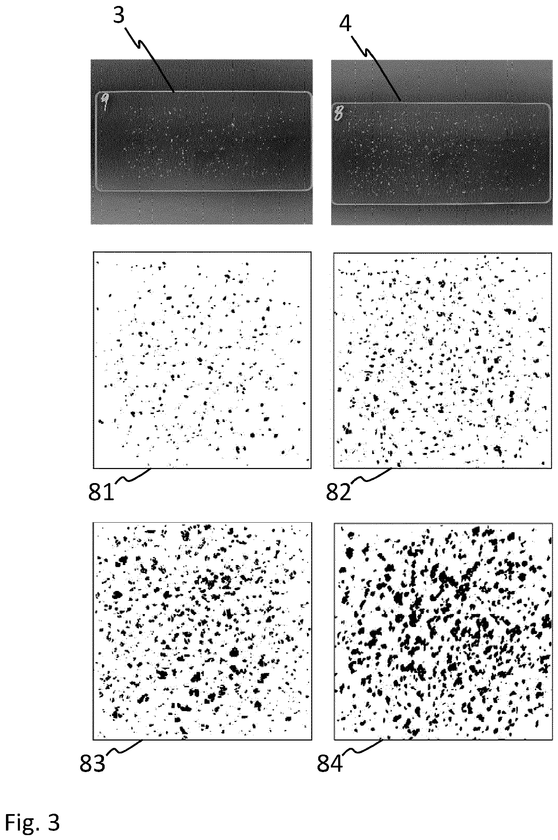

Fig. 3 shows in the upper part to photographs of samples 3 and 4, corresponding to samples of material no. 3. Here, sample 3 is a chemically strengthened sample after gravel testing, whereas sample 4 is a non-strengthened sample. Further, fig. 3 shows reference surface according to DIN EN ISO 20567-1 for characteristic values of 1.0 (reference numeral 81), of 2.0 (reference numeral 82), of 2.5 (reference numeral 83), and of 3.0 (reference numeral 84), respectively. As can be seen upon comparison with these reference surface 81 to 84, sample 3 has lesser surface damage, resulting in a CV of 1.5, whereas the higher surface damage visible in non-strengthened sample 4 results in CV 2.0 to 2.5.

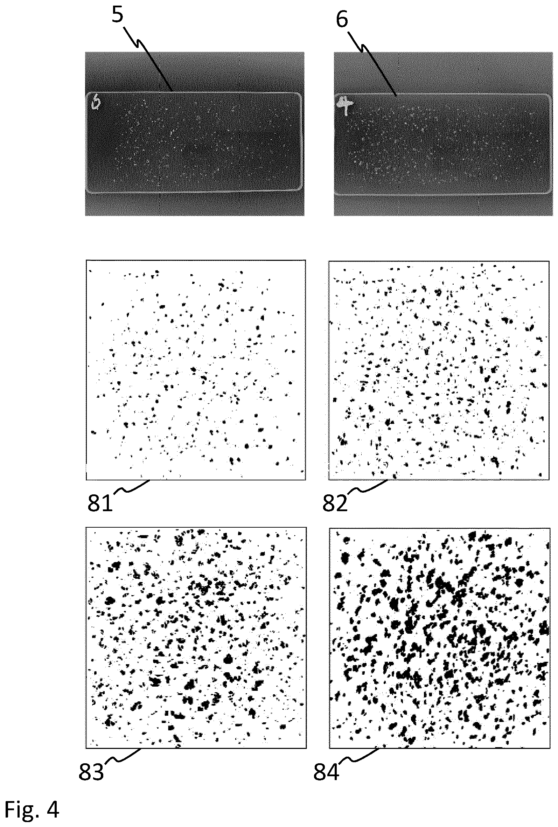

Fig. 4 shows in the upper part to photographs of samples 5 and 6, corresponding to samples of material no. 1. Here, sample 5 is again a chemically strengthened sample after gravel testing, whereas sample 6 is a non-strengthened sample. Further, fig. 4 shows reference surface according to DIN EN ISO 20567-1 for characteristic values of 1.0 (reference numeral 81), of 2.0 (reference numeral 82), of 2.5 (reference numeral 83), and of 3.0 (reference numeral 84), respectively. As can be seen upon comparison with these reference surface 81 to 84, sample 5 has lesser surface damage, resulting in a CV of 1.5, whereas the higher surface damage visible in non-strengthened sample 6 results in CV 2.0 to 2.5.

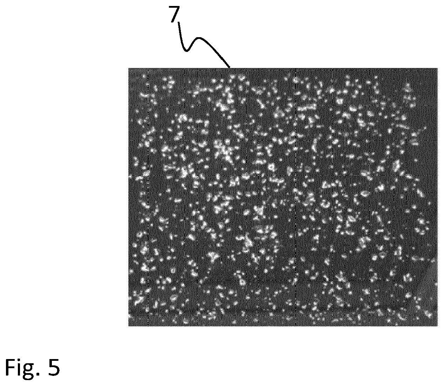

Further, fig. 5 shows a photograph of sample 7 corresponding to the comparative example after gravel testing. This gravel testing results in a higher amount of deteriorated surface area that in samples 3 and 5 according to the disclosure. The corresponding CV is. 3.0.

Whereas even samples that have not been chemically strengthened (see samples 4 and 6 in fig. 3 and 4, respectively) show a lesser degree of surface defects in comparison sample 7, this already good performance can be optimized by strengthening, as can be seen for samples 3 and 5, as explained above.

List of reference numerals

1      Glass sheet

2      sample holder

21      step tread 21

22      riser 22

23      middle portion, depression of sample holder

3      sample for material no. 3, chemically strengthened

4      sample for material no. 3, not strengthened

5      sample for material no. 1, not strengthened

6     sample for material no. 1, chemically strengthened
7     comparative example, chemically strengthened
81    CV example according to DIN EN ISO 20567-1, CV 1.5
82    CV example according to DIN EN ISO 20567-1, CV 2.0
83    CV example according to DIN EN ISO 20567-1, CV 2.5
84    CV example according to DIN EN ISO 20567-1, CV 3.0

**Claims**

1. Chemically strengthened glass sheet (1) having a thickness of at least 3.3 mm, preferably at least 3.5 mm, more preferably at least 3.8 mm and at most 6 mm, preferably at most 5 mm, more preferably at most 4.5 mm, comprising, in mol% on an oxide basis, the following components:

| | |
|---|---|
| $SiO_2$ | 65 to 85 |
| $B_2O_3$ | 3 to 13 |
| $\Sigma\ (R_2O + RO)$ | 3 to 19 |

wherein $R_2O$ represents any of $Li_2O$, $Na_2O$, and $K_2O$, and any combination thereof, and wherein RO represents any of MgO, CaO, SrO and BaO, and any combination thereof,
and
wherein preferably the glass sheet (1) shows no breakage after two cycles of gravel test according to VW80000 M-02 (ISO 20567-1, preferably for a glass sheet size of 136 by 63 mm$^2$,
and/or
wherein preferably the glass sheet (1), for a glass sheet size of 136 by 63 mm$^2$, passes a ball drop test according to PV 3905 with a drop height of at least 30 cm using a 500 g steel ball with a diameter of 50 mm.

2. The chemically strengthened glass sheet (1) according to claim 1, wherein

a sum of components $SiO_2$, $B_2O_3$ and $Al_2O_3$ in the glass sheet (1), given in mol% on an oxide basis, is at least 80, preferably at least 84, more preferably at least 90 , and particularly preferably at most 98, more particularly preferably at most 94 and most particularly preferably at most 91,
and wherein the glass sheet (1) has a network modifier oxide content, given in mol% on an oxide basis, of at least 3 and preferably at most 19, more preferably at most 15, most preferably at most 11,
and wherein $Li_2O$, $Na_2O$, $K_2O$, MgO, CaO, SrO and BaO or any combination thereof are considered network modifier oxides.

3. The chemically strengthened glass sheet (1) according to any of claims 1 or 2, wherein a sum of the components $SiO_2$ and $B_2O_3$, given in mol% on an oxide basis, is between at least 72, preferably at least 75.5, particularly preferably at least 88, more particularly preferably at least 90, and preferably at most 95.

4. The chemically strengthened glass sheet (1) according to any of claims 1 to 3, comprising the following components, in mol% on an oxide basis

| | |
|---|---|
| $SiO_2$ | 79 to 85, preferably 80 to 85 |
| $Al_2O_3$ | 0.5 to 4 |
| $B_2O_3$ | 8 to 12 |
| $Na_2O$ | 2.5 to 5.2 |
| $K_2O$ | 0.3 to 1.8 |
| MgO | 0 to 3 |
| CaO | 1.3 to 2.9. |

5. The chemically strengthened glass sheet (1) according to any of claims 1 to 4, wherein the glass sheet (1) comprises $Li_2O$ only in an unavoidable trace amount of not more than 500 ppm per weight.

6. The chemically strengthened glass sheet (1) according to any of claims 1 to 5, **characterized by** a DoL between 8.5 and 13.5 $\mu$m and a compressive stress of 400 MPa or less, preferably 250 or less, particularly preferably 170 MPa or less, more particularly preferably 160 MPa or less, and preferably of at least 140 MPa, in particular between 140 MPa and 170 MPa, preferably between 140MPa and 160 MPa, preferably for glass sheet thicknesses between at least 3.3 mm, preferably at least 3.5 mm, more preferably at least 3.8 mm, and at most 6 mm, preferably at most 5 mm, more preferably at most 4.5 mm.

7. The chemically strengthened glass sheet (1) according to any of claims 1 to 3, comprising the following components, in mol% on an oxide basis

| | |
|---|---|
| $SiO_2$ | 67 to 71, preferably 69 to 71 |
| $Al_2O_3$ | 10 to 12 |
| $B_2O_3$ | 3 to 5 |
| $Li_2O$ | 7.5 to 9 |
| $Na_2O$ | 1.0 to 2.4, preferably 2.0 to 2.4 |
| $K_2O$ | 0.1 to 0.3 |
| MgO | 0 to 1.2, preferably 1 to 1.2 |
| CaO | 2.5 to 5, preferably 2.5 to 3.5 |
| SrO | 0 to 0.4, preferably 0.1 to 0.4, more preferably 0.1 to 0.3 |

8. The chemically strengthened glass sheet (1) according to any of claims 1 to 3 or 7, **characterized by** a DoCL between 8.5 and 13.5 $\mu$m and a compressive stress (CS30) of 700 MPa or less, and preferably of at least 250 MPa, in particular between 260 and 450 MPa, preferably for glass sheet thicknesses between at least 3.3 mm, preferably at least 3.5 mm, more preferably at least 3.8 mm, and at most 6 mm, preferably at most 5 mm, more preferably at most 4.5 mm.

9. A method for producing a chemically strengthened glass sheet (1), preferably a chemically strengthened glass sheet (1) according to any of claims 1 to 8, comprising

   - providing a glass sheet,
   - providing a bath comprising a molten alkali salt or a mixture of molten alkali salts,
   - immersing the glass sheet in the bath, so that an ion exchange takes place,

   wherein ion exchange is effected for a duration of at least 2 hours to at most 12 hours and at a temperature between at least 400°C and at most 480°C.

10. The method as claimed in claim 9, wherein the temperature is between at least 420°C and at most 460°C, preferably at most 440°C, and wherein most preferably the temperature is 420°C.

11. The method as claimed in any of claims 9 or 10, wherein the duration is between at least 2 hours and at most 10 hours, preferably between at least 2 hours and at most 8 hours, more preferably between at least 4 hours and at most 6 hours, and wherein most preferably the duration is 4 hours.

12. The method as claimed in any of claims 9 to 10, wherein the alkali salt comprises a nitrate or is a nitrate.

13. The method as claimed in any of claims 9 to 12, comprising only a single immersion step.

14. The method as claimed in any of claims 9 to 13,

   - wherein the glass sheet composition corresponds to the glass composition of claim 4, and wherein the alkali salt comprises a potassium salt, preferably $KNO_3$, and wherein particularly preferably the glass sheet (1) comprises $Li_2O$ only in an unavoidable trace amount of not more than 500 ppm per weight,
   or
   - wherein the glass sheet composition corresponds to the glass composition of claim 7, and wherein the alkali salt comprises a sodium salt, preferably $NaNO_3$.

15. A glass sheet (1), preferably a glass sheet (1) according to any of claims 1 to 8, produced or producible in a method according to any of claims in a method 9 to 14.

16. Use of the chemically strengthened glass sheet (1) according to any of claims 1 to 8 or 15 and/or produced in a method according to any of claims 9 to 14 as a cover glass for a protective housing for an optical sensor, in particular a LiDAR sensor.

Fig. 1

Fig. 2

Fig. 3

Fig. 4

7

Fig. 5

Europäisches
Patentamt

European
Patent Office

Office européen
des brevets

# EUROPEAN SEARCH REPORT

Application Number

**EP 21 19 5679**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/247284 A1 (MIYASAKA JUNKO [JP] ET AL) 31 August 2017 (2017-08-31) | 1-3,15, 16 | INV. C03C3/089 |
| Y | * paragraphs [0108], [0112]; examples 1,6,12,13 * | 9-14 | C03C3/091 C03C3/097 C03C21/00 |
| Y | US 2010/179044 A1 (SELLIER JULIEN [FR] ET AL) 15 July 2010 (2010-07-15) * embodiment 6; table 8 * | 6,9-14 | |
| X | US 2016/176751 A1 (LAUTENSCHLAEGER GERHARD [DE] ET AL) 23 June 2016 (2016-06-23) | 4,5 | |
| Y | * glass 14 * | 6 | |
| X | US 5 876 472 A (GROS OLIVER [DE] ET AL) 2 March 1999 (1999-03-02) | 4,5 | |
| Y | * Glass E * | 6 | |
| X | EP 0 699 636 A1 (JENAER GLASWERK GMBH [DE]) 6 March 1996 (1996-03-06) | 4,5 | |
| Y | * examples 21,27; table 3 * | 6 | TECHNICAL FIELDS SEARCHED (IPC) |
| X | US 2020/199013 A1 (XUE JUNMING [CN] ET AL) 25 June 2020 (2020-06-25) * example s20 * | 1-3,7,8 | C03C |

The present search report has been drawn up for all claims

| Place of search | Date of completion of the search | Examiner |
|---|---|---|
| Munich | 31 March 2022 | Saldamli, Saltuk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                          

& : member of the same patent family, corresponding document

EPO FORM 1503 03.82 (P04C01)

Europäisches
Patentamt

European
Patent Office

Office européen
des brevets

**Application Number**

**EP 21 19 5679**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

23

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

```
    1. claims: 1-6, 9-16

        Chemically strengthened glass sheet according to claims 4-6
                                 ---

    2. claims: 1-4, 7-16

        Chemically strengthened glass sheet according to claims 7, 8
                                 ---
```

## ANNEX TO THE EUROPEAN SEARCH REPORT
## ON EUROPEAN PATENT APPLICATION NO.

EP 21 19 5679

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2022

| Patent document cited in search report | | Publication date | Patent family member(s) | | Publication date |
|---|---|---|---|---|---|
| US 2017247284 | A1 | 31-08-2017 | CN | 107001115 A | 01-08-2017 |
| | | | EP | 3228601 A1 | 11-10-2017 |
| | | | JP | WO2016088778 A1 | 14-09-2017 |
| | | | US | 2017247284 A1 | 31-08-2017 |
| | | | WO | 2016088778 A1 | 09-06-2016 |
| US 2010179044 | A1 | 15-07-2010 | CN | 101795986 A | 04-08-2010 |
| | | | EP | 2197803 A1 | 23-06-2010 |
| | | | FR | 2920426 A1 | 06-03-2009 |
| | | | JP | 2010537924 A | 09-12-2010 |
| | | | KR | 20100063051 A | 10-06-2010 |
| | | | US | 2010179044 A1 | 15-07-2010 |
| | | | WO | 2009044037 A1 | 09-04-2009 |
| US 2016176751 | A1 | 23-06-2016 | CN | 105712623 A | 29-06-2016 |
| | | | DE | 102014119594 A1 | 23-06-2016 |
| | | | FR | 3030488 A1 | 24-06-2016 |
| | | | JP | 6725984 B2 | 22-07-2020 |
| | | | JP | 2016147796 A | 18-08-2016 |
| | | | US | 2016176751 A1 | 23-06-2016 |
| US 5876472 | A | 02-03-1999 | AT | 272584 T | 15-08-2004 |
| | | | DE | 19643870 A1 | 07-05-1998 |
| | | | EP | 0839772 A1 | 06-05-1998 |
| | | | JP | 4195115 B2 | 10-12-2008 |
| | | | JP | H10182182 A | 07-07-1998 |
| | | | US | 5876472 A | 02-03-1999 |
| EP 0699636 | A1 | 06-03-1996 | AT | 153009 T | 15-05-1997 |
| | | | DE | 4430710 C1 | 02-05-1996 |
| | | | EP | 0699636 A1 | 06-03-1996 |
| | | | JP | H0867529 A | 12-03-1996 |
| | | | US | 5599753 A | 04-02-1997 |
| US 2020199013 | A1 | 25-06-2020 | CN | 111094199 A | 01-05-2020 |
| | | | EP | 3679002 A1 | 15-07-2020 |
| | | | JP | 2020532481 A | 12-11-2020 |
| | | | KR | 20200050457 A | 11-05-2020 |
| | | | US | 2020199013 A1 | 25-06-2020 |
| | | | WO | 2019041359 A1 | 07-03-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019130285 A1
- WO 2019161261 A1
- US 10252935 B2
- US 20200132521 A1
- WO 2020247245 A1

**Non-patent literature cited in the description**

- **SEBASTIAN BRUNS ; TOBIAS UESBECK ; DOMINIK WEIL ; DORIS MÖNCKE ; LEO VAN WÜLLEN ; KARSTEN DURST ; DOMINIQUE DE LIGNY.** Influence of Al2O3 Addition on Structure and Mechanical Properties of Borosilicate Glasses. *Front. Mater.,* 28 July 2020
- Quantitative Evaluation of Densification and Crack Resistance in Silicate Glasses. **CHRISTIAN HERMANSEN.** Master Thesis. Aalborg University, 05 July 2011